# EUROPEAN PATENT APPLICATION

(11) **EP 4 530 210 A1**
(43) Date of publication of application: **02.04.2025**
(21) Application number: 23199897.2
(22) Date of filing: 26.09.2023
(51) Int. Cl.: B65D 5/20, B29C 45/14, B65B 29/02, B65D 65/46, B65D 85/804, B65D 3/06

(54) **COFFEE CAPSULE AND METHOD FOR MANUFACTURING THE SAME**

(71) Applicant: Tchibo GmbH, 22297 Hamburg (DE)
(72) Inventor: DÖHMEN, Ben, 20144 Hamburg (DE); MAYR, Viktoria, 22926 Ahrensburg (DE); WICHE, Marius-Konstantin, 22763 Hamburg (DE)
(74) Representative: Frei Patent Attorneys

(57) **Abstract**

**Portion packaging** (1) for packaging an **extraction material** (9) for preparation of a beverage from the extraction material (9) and an extraction liquid comprises a **first part** (1a) forming two or more **wall sections** (1') of the portion packaging (1). And the first part (1a) comprises
- a **wall-forming part** (2) comprising two or more **sheet sections (2'),** each of the sheet sections (2') forming a respective one of the wall sections (1'); and
- an injection-molded **support structure (3).**

The wall-forming part (2) comprises one or more **pairs of adjoining edges (20a, 20b),** each of the sheet sections (2') having at least one **edge** (20) forming, together with an **adjoining edge** (20) of a neighboring one of the sheet sections (2'), one of the pairs of adjoining edges (20a, 20b). The support structure (3) **interconnects** the adjoining edges (20a, 20b) of each of the pairs of adjoining edges.

## Description

The invention relates to the preparation of beverages or the like from an extraction material, for example ground coffee, contained in a portion packaging (for example a coffee capsule). Corresponding beverage preparation machines for preparing beverages or the like from a portion package with such a portion packaging and with an extraction material (for example coffee, more specifically ground coffee) which is contained in the portion package are known in the art. More specifically, the invention relates to such portion packages and portion packagings and to ways of manufacturing these. It relates to methods and devices according to the opening clauses of the claims.

Beverage preparation machines for preparing beverages or the like from an extraction material present in a portion packaging are known, including but not limited to, as coffee machines or espresso machines. Due to the extraction process for the preparation of the beverage, they can also be referred to as extraction devices. In many corresponding systems, the portion packages are embodied as capsules (portion capsules), in which the extraction material, e.g., ground coffee, is sealed, e.g., in an airtight manner. For the extraction, the capsule is pierced, for example on two opposite sides. An extraction liquid - usually hot water - is then introduced on the first side (injector side). On the second side (discharge side or extractor side), the extraction product is discharged from the capsule. This is done in a so-called brewing module. Such a module comprises a brewing chamber in which the capsule is accommodated. Depending on the beverage to be prepared and on the system, quite considerable pressure must be present inside the capsule during the brewing process. As an alternative to systems in which the portion capsule is pierced, there are also systems with capsules that are already provided with a perforation which, for example, is covered by a protective film that is removed or dissolved before the brewing process.

Particularly popular are brewing modules in which the capsule is inserted and the brewing chamber is closed, for example, by means of an operating lever or by means of a motor, wherein when the brewing chamber is opened again after the brewing process, the capsule is automatically removed from the brewing chamber and ejected into a capsule container. Such brewing modules with automatic capsule ejection are usually designed as horizontal brewing modules, i.e. the capsule is inserted from above, the brewing chamber is closed by a horizontal relative movement of two brewing module parts (injector and discharge unit), the brewing liquid flows primarily horizontally, and the capsule container is embodied below the brewing chamber.

The invention relates to such portion packagings and portion packages.

Portion packagings made of various polymers and/or of aluminium are known. And various ways of manufacturing portion packagings are known, too.

In view of environmental and sustainability considerations, it is desirable to use portion packagings which comprise, preferably predominantly, a biodegradable material, e.g., a compostable material. And/or it would be desirable if the portion packagings would comprise, preferably predominantly, recycled materials. And/or it would be desirable if the portion packagings would be recyclable, at least to a large extent.

New materials, however, may require new manufacturing methods.

Therefore, one object of the invention is to create a new method for manufacturing portion packagings and portion packages, such as coffee capsules, and to create corresponding portion packagings and portion packages.

Another object of the invention is to provide a particularly ecological portion packaging and portion package as well as corresponding manufacturing methods.

Another object of the invention is to provide a portion packaging which, at least to a large extent, is biodegradable, in particular compostable, more particularly home compostable.

Another object of the invention is to provide a portion packaging which, at least to a large extent, is recyclable, in particular recyclable in wastepaper recycling.

Another object of the invention is to provide a portion packaging which, at least to a large extent, is made of recycled materials, in particular made of wastepaper.

Furthermore, a corresponding portion package shall be provided, and corresponding methods for manufacturing a portion packaging and a portion packaging, respectively, shall be provided.

Further objects and various advantages emerge from the description and embodiments below.

At least one of these objects can be achieved in some implementations of devices and/or methods described in this disclosure.

The inventors have contemplated that paper-based materials can be very ecological, as they can be renewable, biodegradable, recycled and/or recyclable. But if one starts with a flat sheet of paper-based material, that sheet needs to be shaped, and, for achieving stability and/or airtightness, different portions or sections of the sheet need to be interconnected. The inventors contemplated that this could be accomplished using injection molding, carried out in such a way that the sheet, in a suitably shaped state, is accommodated in the injection molding tool during the injection molding process. This way, the interconnections can be formed by the injection molding material, which, e.g., can fill gaps between sections of the sheet. Stability and/or airtightness of the portion packaging can be achieved in this way.

The suggested method is, in some way, a bit similar to a process known as "in-mold labelling". In such a process, however, a small label is inserted in the injection molding tool, and the by far largest volume portion of the product is made of the injection molding material - whereas in the herein described manufacturing method, most of the material volume of the portion packaging will usually be taken by the material of the sheet, while only a minor portion of the volume is taken by the injection molding material.

Portion packagings and corresponding portion packages can this way be produced in a particularly ecological way, in particular when specific injection molding materials are used, and when specific materials are used for the walls of the portion packaging, i.e. for the herein described wall-forming part.

In particular, the portion packaging can be a **portion packaging** for packaging an **extraction material** for preparation of a beverage from the extraction material and an extraction liquid, wherein the portion packaging comprises a **first part** comprising two or more **wall sections** of the portion packaging, and the first part comprises
- a **wall-forming part** comprising two or sheet **sheet sections,** each of the wall sections forming a respective one of the wall sections; and
- an injection-molded **support structure.**

In particular, the wall-forming part can comprise one or more **pairs of adjoining edges,** and each of the sheet sections can have at least one **edge** forming, together with an **adjoining edge** of a neighboring one of the sheet sections, one of the pairs of adjoining edges. And the support structure can **interconnect** the adjoining edges of each of the pairs of adjoining edges.

Accordingly, the support structure can be made of an injection molding material.

The support structure can stabilize the first part, i.e. it can provide an increased mechanical stability of the first part.

This way, the portion packaging can be a particularly environmentally friendly one and, at the same time, can suited for the purpose.

The support structure can in particular adhere to the wall-forming part and to the sheet sections and wall sections, respectively.

Each of the sheet sections can be sheet shaped. Being sheet shaped can in particular mean being, at least locally, much thinner in a first direction than in directions perpendicular the first direction, e.g., like in case of a sheet or a foil.

The way of manufacturing the portion packaging as herein described can be costeffective, and it is possible to make use of know-how present for well-established manufacturing methods, such as injection molding and, more particularly, in-mold labelling, which are already used for manufacturing other products and/or used with other materials.

In some embodiments, the first part is a **main part** of the portion packaging; in particular the main part can be a part of the portion packaging for receiving the extraction material. It can define an interior space for uptake of the extraction material. In some embodiments, the first part is a **lid part** of the portion packaging. In particular the lid part can be a part of the portion packging to be sealed onto the main part to completely close, in particular in an airtight manner, the portion packaging and portion package, respectively.

In some embodiments, the portion packaging comprises, in addition to the first part, a **second part.** In particular the second part can be the lid part in case the first part is the main part; or, vice versa, the second part can be the main part in case the first part is the lid part.

In some embodiments, the second part is manufactured as herein described for the first part.

In some embodiments, the second part is **foil,** in particular a foil for sealing the first part and the portion packaging, respectively. This can in particular be the case when the first part is the main part.

In some embodiments, each of the sheet sections is contiguous and is **devoid of openings** extending through it.

In some embodiments, at least 50 % by weight, more particularly at least 75 % by weight, even more particularly at least 85 % by weight, still more particularly at least 90 % by weight of the first part is taken by the wall-forming part.

In some embodiments at most 25 % by weight, more particularly at most 15 % by weight, even more particularly at most 10 % by weight of the first part is taken by the injection molding material and/or by the support structure.

The portion packaging in particular can be a capsule-type portion packaging.

The extraction material in particular can be ground coffee (coffee powder). And the extraction liquid in particular can be water, more particularly hot water. And the beverage can be coffee.

In some embodiments, the support structure comprises a **first polymer material,** in particular the support structure can be essentially made of the first polymer material, more particularly wherein the support structure is comprised of the first polymer material by at least 90 % by weight, more particularly by at least 95 % by weight. This way, it can be effected that a recyclability and/or biodegradability of the portion packaging is not or hardly impeded by the support structure.

In some embodiments, the first polymer material comprises a **biodegradable** polymer material, more specifically, the first polymer material can essentially be a biodegradable polymer material. This can contribute to the biodegradability of the portion packaging. More specifically, the first polymer material can comprise and, more particularly, essentially be a **compostable** polymer material. In particular, the first polymer material can comprise and, more particularly, essentially be one or more of
- a poly(vinyl alcohol) (PVOH), in particular a vinyl-alcohol copolymer;
- a cellulose-ether polymer;
- a butenediol-vinylalcohol (BVOH) copolymer;
- an ethylene-vinylalcohol (EVOH) copolymer;
- a poly(lactic acid) (PLA);
- a polybutylene succinate (PBS);
- a polyhydroxyalkanoate (PHA), in particular a hydroxyalkanoate copolymer, more particularly a polyhydroxybutyrate (PBA) or a hydroxybutyrate copolymer, even more particularly a hydroxybutyrate hydroxyhexanoate copolymer, such as a poly(3-hydroxybutyrate-co-3-hydroxyhexanoate) (PHBH).

In the present disclosure, **compostable** can more specifically mean home compostable.

In the present disclosure, **"biodegradable"** can, more specifically, mean biologically degradable according to the European standard EN 13432 (more particularly:
EN 13432:2004). In addition, or as an alternative, it can mean biologically degradable according to the European standard EN 14995 (more particularly EN 14995:2006).

Thus "biodegradable" especially can refer to "biologically degradable" according to EN 13432 and/or according to EN 14995. In the present disclosure, "compostable" or "home compostable" can, more specifically, mean compostable or home compostable according to the European standard EN 13432 (more particularly: EN 13432:2004) for packaging and/or according to the European standard EN14995 (more particularly EN 14995:2006) for plastics/synthetic materials.

A vinyl alcohol copolymer, such as one of those mentioned above, can have the advantage that it can form an oxygen barrier. Considering their water solubility, it can be of advantage to consider a vinyl alcohol copolymer which has a relatively low water solubility - because of the brewing process in which it may be exposed to hot water (for a short time). Accordingly, it can be of advantage to consider a vinyl alcohol copolymer which has a high degree of hydrolysis, e.g., at least 98 mol%, in particular at least 99 mol%, more particularly at least 99.5 mol%.

If a water-insoluble polymer material is selected, such as one of those mentioned above, one can expose it to the hot water during the brewing process, and it can readily withstand the same. Furthermore, it can provide a water vapor barrier.

These materials can be used as injection molding materials, and they can provide a desired stability if used to form a suitable support structure.

The first polymer material can function as an oxygen barrier (in particular in case of a vinyl alcohol copolymer) and/or as a vapor barrier (in particular in case of a water-insoluble material such as PLA, PHA, PBS). This can be very valuable considering the fact that extraction materials such as ground coffee can be very sensitive to exposure to oxygen and to exposure to water and water vapor, respectively.

In some embodiments, the wall-forming part and, in particular each of the sheet sections, comprises a **fibrous material** and a **second polymer material.** Considering the fibrous materials herein described, certain desired properties of the portion packaging cannot be met without having another material in the wall-forming part and in the sheet sections, respectively. Such desired properties can comprise, e.g., barrier properties such as oxygen barrier properties and vapor barrier properties. However, combining the fibrous material with a (second) polymer material can make possible to achieve such properties.

In some embodiments,
- the wall-forming part is comprised of the fibrous material by at least 60 % by weight, more particularly by at least 80 % by weight; and/or
- the wall-forming part is comprised of the second polymer material by at most 30 % by weight, more particularly by at most 20 % by weight.

Accordingly, each of the wall sections and thus also the first part can be, to a large extent, comprised of the fibrous material and, in particular, can be comprised to at least 90 % by weight, more particularly to at least 95 % by weight, of the fibrous material and the second polymer material. Considering the herein disclosed fibrous materials and polymer materials, the first part and thus also the portion packaging can be very ecological.

In some embodiments, the second polymer material is **identical** to the first polymer material; in other embodiments, it is a polymer material which is **different** from the first polymer material. For example, the first polymer material can comprise or essentially be a water-insoluble biodegradable polymer material, such as one of PLA, PBS, PHA, while the second polymer material comprises or essentially is a water-soluble biodegradable polymer material, such as a vinyl alcohol copolymer.

In some embodiments, the second polymer material comprises a **biodegradable** polymer material, more specifically, the second polymer material can essentially be a biodegradable polymer material. This can contribute to the biodegradability of the portion packaging. More specifically, the second polymer material can comprise and, more specifically, essentially be a **compostable** polymer material. In particular, the second polymer material can comprise and, more particularly, essentially be one or more of
- a poly(vinyl alcohol) (PVOH), in particular a vinyl-alcohol copolymer;
- a cellulose-ether polymer;
- a butenediol-vinylalcohol (BVOH) copolymer;
- an ethylene-vinylalcohol (EVOH) copolymer
- a poly(lactic acid) (PLA);
- a polybutylene succinate (PBS);
- a polyhydroxyalkanoate (PHA), in particular a hydroxyalkanoate copolymer, more particularly a polyhydroxybutyrate (PBA) or a hydroxybutyrate copolymer, even more particularly a hydroxybutyrate hydroxyhexanoate copolymer, such as a poly(3-hydroxybutyrate-co-3-hydroxyhexanoate) (PHBH).

These materials can provide desired properties of the portion package such as desired barrier properties and also desired mechanical stability, if used for the wall-forming part. For example:
In some embodiments, the wall-forming part comprise, in particular constitute, a layer system comprising a **first layer** and a **second layer,** the first layer comprising the fibrous material (e.g., at at least 90 % by weight) and the second layer comprising the second polymer material (e.g., at at least 90 % by weight). For example, the wall-forming part can be comprised of the first layer and the second layer by at least 85 % by weight, more particular by at least 95 % by weight. In particular, said second layer can be arranged between said first layer and the interior space.

In some embodiments, the wall-forming part (and, accordingly, each of the sheet sections) exhibits an **oxygen transmission rate (OTR),** at 23°C and a relative humidity of 50%, of at most 3 cm³/m² per day, in particular of at most 1 cm³/m² per day, more particularly of at most 0.2 cm³/m² per day. This can effect an increased shelf life of the portion packages. For this, the second polymer material, e.g., comprised in the second layer, can comprise (or essentially be) a vinyl alcohol copolymer (such as PVOH, BVOH, EVOH mentioned above).

In some embodiments, the wall-forming part (and, accordingly, each of the sheet sections) exhibits a **water vapor transmission rate (WVTR),** at 23°C and a relative humidity of 85%, of at most 25 g/m² per day, in particular of at most 10 g/m² per day, more particularly of at most 5 g/m² per day, even more particularly of at most 2 g/m² per day. The WVTR in this disclosure can in particular be determined according to ISO 15106-2 (more particularly: ISO 15106-2:2015). This can effect an increased shelf life of the portion packages.

Furthermore, the second polymer material can make possible, like the first polymer material, to maintain environmental compatibility of the portion packaging (and of the corresponding portion package), at least to a large extent. E.g., the portion packaging (and the corresponding portion package) can be biodegradable or even compostable, despite of (or because of) the second polymer material.

In some embodiments, the second polymer material comprises a poly(vinyl alcohol) (PVOH), more particularly the second polymer material is a poly(vinyl alcohol) (PVOH). The poly(vinyl alcohol) can in particular be a vinyl-alcohol copolymer. The same can apply to the first polymer material.

In some embodiments, the second polymer material comprises a cellulose-ether polymer, more particularly the second polymer material is a cellulose-ether polymer. The same can apply to the first polymer material.

In some embodiments, the second polymer material comprises a butenediol-vinylalcohol-copolymer (BVOH), more particularly the polymer material is a butenediol-vinylalcohol-copolymer (BVOH). BVOH can have a particularly good solubility, especially at high degrees of hydrolysis, such as close to or at 100%. The same can apply to the first polymer material.

In some embodiments, the second polymer material comprises a ethylene-vinylalcohol copolymer (EVOH), more particularly the second polymer material is an ethylene-vinylalcohol copolymer (EVOH). EVOH can provide, especially at high ethylene contents, a particularly good oxygen barrier function, in particular at high humidities. The same can apply to the first polymer material.

The second polymer material, in particular the PVOH, can have a degree of hydrolysis of 70% to 99,9%. The degree of saponification can control the performance to the oxygen transmission barrier. A high saponification can, for instance, improve the oxygen transmission barrier performance. The same can apply to the first polymer material.

Vinyl-alcohol containing polymer in the second polymer material can comprise, e.g., more than 75%, in particular more than 90% monomer units carrying an OH unit each. The same can apply to the first polymer material.

The fibrous material can comprise and, more particularly, can essentially be, e.g., cellulose fibers. More particularly, in some embodiments, the fibrous material comprises, at at least 75 %, in particular at at least 90 %, **cellulose** fibers.

The fibrous material can comprise and, more particularly, can essentially be, e.g., recycled material, in particular wastepaper or material obtained from wastepaper, e.g., wastepaper fibers. More particularly, in some embodiments, the fibrous material comprises, at at least 75 %, in particular at at least 90 %, **recycled** material, more particularly wastepaper or material obtained from wastepaper, in particular wastepaper fibers.

The fibrous material can comprise, more particularly, and can essentially be, e.g., a renewable material, in particular renewable fibers, such as plant fibers, e.g., fibers from hay, straw, hemp or the like. More particularly, in some embodiments, the fibrous material comprises, at at least 75 %, in particular at at least 90 %, **renewable** material, such as plant fibers.

The fibrous material can comprise and, more particularly, can essentially be, e.g., a biodegradable material. More particularly, in some embodiments, the fibrous material comprises, at at least 75 %, in particular at at least 90 %, **biodegradable** material, in particular compostable material.

In some embodiments, the support structure closes, e.g., fills up, any **gap** between the adjoining edges of each of the pairs of adjoining edges, in particular in an airtight manner. Thus, the portion packaging and at least the first part can be well suited for packaging the extraction material, at least regarding leak tightness requirements and/or mechanical stability requirements.

In some embodiments, the support structure is **contiguous** and can be, in particular, a single molding part. This can provide stability of the first part.

In other embodiments, however, the support structure comprises two or more separate **support structure portions.** And in particular, each of the support structure portions can be contiguous, e.g., forming a single molding part.

In some embodiments, the support structure comprises bar-shaped constituents, in particular, the support structure can be essentially composed of bar-shaped constituents. More specifically, in this regard, the term "bar-shaped" can mean lengthy or line-like (in contrast to plane- or area-like), and the bar-shaped constituents can be straight or curved. The support structure can comprise, e.g., a network of interconnected bar-shaped constituents.

In some embodiments, the first part defines an **interior space.** And in particular, each of the two or more wall sections can form a **boundary** of the interior space. Accordingly, also each of the sheet sections can form a boundary of the interior space.

The interior space can be, e.g., a space for uptake of the extraction material.

In some embodiments, the first part defines an **interior space,** the interior space being **open** at one side referred to as **open side** and being otherwise **delimited,** in an airtight manner, by the wall-forming part and the support structure. Thus, the interior space can be delimited by a combination of the wall-forming part and the support structure. The interior space, accordingly, can be partially enclosed by a combination of the wall-forming part and the support structure. For example, during manufacturing the portion packaging and/or manufacturing the portion package, the open side can be closed by a second part of the portion packaging, e.g., as herein described, and thus can be closed, e.g., by a foil.

"Open" in this regard means that the interior space is at the open side not limited by the first part. However, regarding the portion packaging, the open side may be closed, e.g., by a second part of the portion packaging, such as by a lid part, e.g., by a the lid part embodied as a foil, more particularly, as a foil for sealing the portion packaging (after introducing the extraction material into the first part and, more particularly into the interior space).

In some embodiments, the interior space is delimited, in an airtight manner,
- at an **end side** which is opposite the open side; and
- **circumferentially** between the open side and the end side.

More particularly, in some embodiments, the two or more sheet sections comprise
- a **first sheet section** delimiting the interior space at the end side, in particular wherein the first sheet section forms an **end wall** of the first part; and
- a **set** of one or more **second sheet sections,** delimiting the interior space circumferentially between the open side and the end side, in particular wherein the set of one or more second sheet sections forms a **circumferential side wall** of the first part.

In some embodiments, the wall-forming part comprises a **contiguous piece of a sheet material devoid of openings** extending through it. For example, e.g., in the first type of embodiments described below, the wall-forming part can essentially be a contiguous piece of a sheet material devoid of openings extending through it. Or, in other cases, e.g., in the second type of embodiments described below, the wall-forming part can essentially be a plurality of contiguous pieces of a sheet material devoid of openings extending therethrough, in particular two such pieces.

In a **first type** of embodiments, the wall-forming part constitutes a **single contiguous part,** more particularly a single contiguous part of a sheet material. In particular, the wall-forming part can constitute a single **wall-forming sheet,** in other words: the wall-forming part can comprise no more than a single wall-forming sheet. For example, the wall-forming part can be a pre-cut piece of a sheet material. The pre-cut piece of a sheet material can furthermore be scored or pre-folded. This way, merely a single piece (the single wall-forming sheet) has to be introduced into an injection molding tool for producing the support structure in an injection molding step. This can facilitate the insertion of the wall-forming piece into the injection molding tool.

In a **second type** of embodiments, the wall-forming part constitutes a **set of at least two sub-parts**, in particular of no more than exactly two sub-parts, each of the sub-parts constituting a separate single contiguous part, more particularly a single contiguous part of a sheet material. In particular, the wall-forming part can comprise two or more **wall-forming sheets**. For example, the wall-forming part can be comprised of two pre-cut pieces of a sheet material (forming a wall-forming sheet each). This way, two pieces (i.e. the two wall-forming sheets) have to be introduced into an injection molding tool for producing the support structure in an injection molding step. But the number of **gaps** between the adjoining edges of each of the pairs of adjoining edges and/or their overall length may be smaller than in case of merely a single wall-forming sheet, so that interconnecting the adjoining edges and/or filling the gaps may be simpler than in case of merely a single wall-forming sheet embodying the wall-forming part.

Of course, in further embodiments, the wall-forming part can comprise **three or more sub-parts**, and three or more separate wall-forming sheets.

A wall-forming sheet can in particular be contiguous and be **devoid of openings** extending through it.

In some embodiments, the wall-forming part together with the support structure forms a **continuous wall body** which is **devoid of openings** extending through the wall body.

The **portion package** comprises a portion packaging as herein described in which the extraction material, in particular **ground coffee,** is contained. In particular, the portion packaging can enclose (or encapsulate) the extraction material in an airtight manner.

Turning now to **manufacturing methods.**

The **method** for manufacturing a **portion packaging** for packaging an **extraction material** for preparation of a beverage from the extraction material and an extraction liquid can in particular be a method for manufacturing a portion packaging of the herein described kind. The portion packaging can comprise a **first part** comprising two or more **wall sections** of the portion packaging. And the method can comprise
- providing a **wall-forming part** comprising two or more **sheet sections;**
- bringing the wall-forming part into a **working state** comprising introducing the wall-forming part into an **injection molding tool;**
- carrying out an **injection molding step**
   - with an **injection molding material,**
   - by means of the injection molding tool,
   - with the wall-forming part in the working state,
   to produce a **support structure** from the injection molding material.

In particular, the wall-forming part in the working state can comprise one or more **pairs of adjoining edges,** each of the sheet sections having at least one **edge** forming, together with an **adjoining edge** of a neighboring one of the sheet sections, one of the pairs of adjoining edges. And the support structure can **interconnect** the adjoining edges of each of the pairs of adjoining edges. And each of the sheet sections can form a respective one of the wall sections.

This is a new way of manufacturing portion packages. It can be cost-efficient. And it can enable the manufacture of particularly ecological portion packages.

In some embodiments, bringing the wall-forming part into the working state takes place at an elevated temperature; e.g., heat can be applied to the wall-forming before and/or while bringing the wall-forming part into the working state.

In some embodiments, bringing the wall-forming part into the working state can comprise, for at least one, in particular for each one, of the pairs of adjoining edges:
- bringing closer to one another the edges which, in the working state, form a respective one of the pairs of adjoining edges.

For example, the wall-forming part can initially be flat, e.g., be an unfolded, pre-cut piece of a sheet material. And in this flat state, at least some of the edges which, in the working state, form a pair of adjoining edges, are at an angle to one another. Then, for bringing the wall-forming part into the working state, the wall-forming part can be reshaped, in particular without adding or removing material from the wall-forming part, e.g., to reduce an angle between the edges which, in the working state, form a pair of adjoining edges. This can be done, e.g., to align said edges substantially in parallel to one another and/or to bring at least some of the sheet sections at an angle with respect to at least another one of the sheet sections. The initially flat item can be transformed into an essentially three-dimensionally shaped item this way.

In some embodiments, bringing the wall-forming part into the working state comprises
- **folding** the wall-forming part.

Folding can be a suitable and efficient process contributing to bringing the wall-forming part into the working state.

For clarification: folding the wall-forming part can mean folding a sub-part of the wall-forming part. However, folding can be particularly useful and efficient, also in case the wall-forming part constitutes merely a single contiguous part.

In some embodiments, bringing the wall-forming part into the working state comprises
- **winding** the wall-forming part, in particular winding the wall-forming part about an **axis** defined by the first part.

Winding can be a suitable and efficient process contributing to bringing the wall-forming part into the working state.

For clarification: winding the wall-forming part can mean winding a sub-part of the wall-forming part. Winding can be particularly useful and efficient, in case the wall-forming part constitutes a set of (at least) two sub-parts, each of the sub-parts constituting a separate single contiguous part; and more particularly in case a **first** of the two sub-parts forms, in the working state, a **circumferential side wall** of the first part, and a **second** of the two sub-parts forms, in the working state, an **end wall** of the first part. In this case, the circumferential side wall can be wound during bringing the wall-forming part into the working state, e.g., it can be wound to form a section of a cylinder barrel or a section of an envelope of a cone. And more specifically, in the working state, an edge of the end wall and an edge of the circumferential side wall can form a pair of adjoining edges.

In some embodiments, in the working state, each of the two or more wall sections forms a **boundary** of an interior space defined by the first part.

In some embodiments, in the working state, the wall-forming part generally describes a **shape** of the first part.

In some embodiments, in the working state, each of the sheet sections is in **contact** with the injection molding tool, more particularly with a respective surface of the injection molding tool.

In some embodiments, carrying out the injection molding step comprising closing, e.g., **filling up,** any gap between the adjoining edges of each of the pairs of adjoining edges by the injection molding material, in particular in an airtight manner.

In some embodiments, the injection molding material comprises a **first polymer material.** In particular, the injection molding material can be essentially the first polymer material, and more particularly, the injection molding material is comprised of the first polymer material by at least 90 % by weight, more particularly by at least 95 % by weight. Suitable polymer materials such as vinyl-alcohol copolymers, preferably with a high degree of hydrolysis, and water-insoluble biodegradable polymers have been mentioned above already.

The **method** for manufacturing a **portion package,** in particular a portion package according as herein described and/or a portion package comprising a portion packaging as herein described, can comprise
- manufacturing a portion packaging as herein described, the portion packaging comprising, in addition to the first part, a **second part;**
- introducing an **extraction material** into the first part and/or into the second part;
- **sealing** the portion packaging, comprising bonding the first part and the second part to one another.

Manufacturing the second part can, optionally, be a step of the method.

In some embodiments, the wall-forming part comprises one or more sealing sections for facilitating the sealing which takes place in the sealing sections.

In some embodiments, the sealing (and the bonding, respectively) comprises application of a **bonding agent,** such as a glue, to the first part and/or to the second part. In particular, the bonding agent can be biodegradable and/or water-soluble; this way, the recyclability of the portion package (and of the portion packaging) may be unimpeded by the bonding agent.

In some embodiments, the bonding comprises application of heat.

In some embodiments, the bonding comprises application of ultrasound energy.

In some embodiments, the second part is manufactured according to one of the processes herein described for the first part. For example, the first and second parts can comprise the same fibrous material and the same first polymer material.

As will be readily understood, features mentioned herein with respect to a method can analogously apply for a described device (portion packaging or portion package) as well. And, vice versa, features mentioned herein with respect to a device (portion packaging or portion package) can analogously apply for a described method as well. The achievable effects correspond to one another.

Further embodiments and advantages emerge from the following description and the enclosed figures and from the dependent claims.

Below, the invention is described in more detail by means of examples and the included drawings. In the drawings, same reference numerals refer to same or analogous elements. The figures show schematically:
- Fig. 1: a portion packaging comprising a main part and a lid part, in a side view;
- Fig. 2: the lid part of the portion packaging of Fig. 1 in a perspective view;
- Fig. 3a: a wall-forming part usable for producing the main part of the portion packaging of Fig. 1, in a top view;
- Fig. 3b: the wall-forming part of Fig. 3a in a folded state, in a perspective view;
- Fig. 3c: a main part of a portion packaging comprising the wall-forming part of Fig. 3a and a support structure, in a perspective view;
- Fig. 3d: an alternative support structure for the main part of Fig. 3c, in a perspective view;
- Fig. 3e: another alternative support structure for the main part of Fig. 3c, in a perspective view;
- Fig. 4a: an injection molding tool with a wall-forming part, in a cross-sectional view, strongly schematized;
- Fig. 4b: the injection molding tool with the wall-forming part of Fig. 6a in a working state, in a cross-sectional view, strongly schematized.
- Fig. 5a: a wall-forming part comprising two sub-parts, in a top view;
- Fig. 5b: the wall-forming part of Fig. 5a in a particular state, in a perspective view;
- Fig. 5c: a main part of a portion packaging comprising the wall-forming part of Fig. 5a and a support structure, in a perspective view;
- Fig. 5d: the main part of Fig. 5c, with filled-in extraction material, in a perspective view;
- Fig. 5e: a portion package comprising the main part of Fig. 5c, in a perspective view;
- Fig. 6a: a wall-forming part, in a top view;
- Fig. 6b: the wall-forming part of Fig. 6a in a folded state, in a perspective view;
- Fig. 6c: a main part of a portion packaging comprising the wall-forming part of Fig. 6a and a support structure, in a perspective view;
- Fig. 7a: a wall-forming part usable for producing a main part of a portion packaging, comprising sealing sections, in a top view;
- Fig. 7b: the wall-forming part of Fig. 7a in a folded state, in a top view;
- Fig. 8a: a wall-forming part usable for producing a main part of a portion packaging, comprising sealing sections, in a top view;
- Fig. 8b: the wall-forming part of Fig. 8a in a folded state, in a top view
- Fig. 9a: a wall-forming part usable for producing a main part of a portion packaging, comprising sealing sections, in a top view.

The described embodiments are meant as examples or for clarifying the invention and shall not limit the invention.

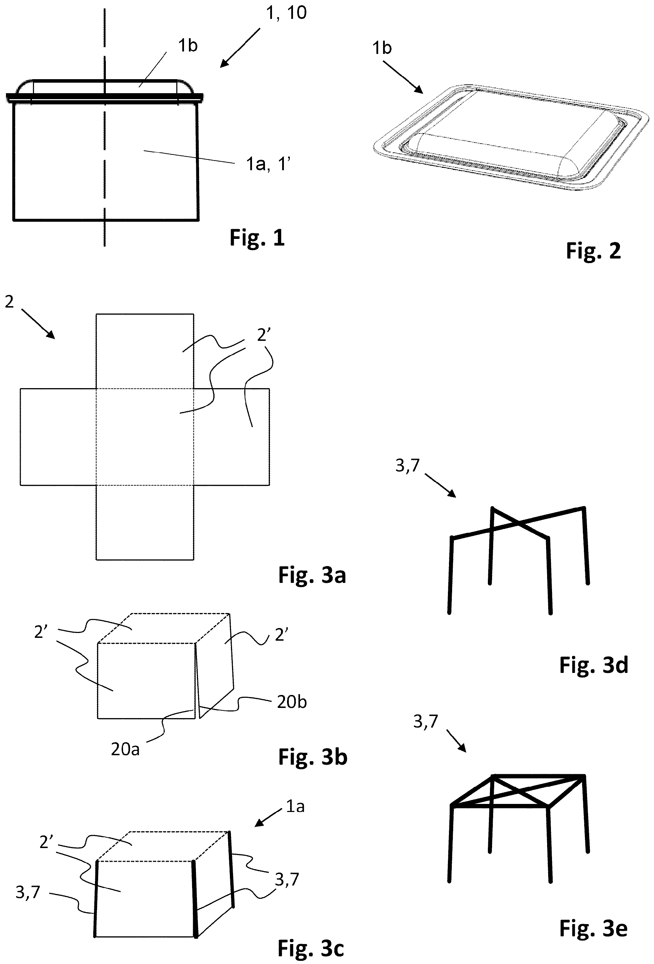

Fig. 1 illustrates a portion packaging 1 comprising a main part 1a and a lid part 1b, in a side view. Fig. 1 can, at the same time be considered to show a portion package 10.

Portion package 10 can be a capsule-type portion package containing ground coffee as an extraction material. Main part 1a has five wall sections, in Fig. 1 one of these is visible.

Fig. 2 illustrates lid part 1b of portion packaging 1 of Fig. 1 in a perspective view.

Figs. 3a to 3c illustrate a way of manufacturing a portion packaging, such as portion packaging 1 of Fig. 1.

Fig. 3a illustrates, in a top view, a wall-forming part 2 which is usable, e.g., for producing the main part 1a of the portion packaging 1 of Fig. 1. Wall-forming part 2 is a pre-cut contiguous piece of sheet. It may be scored or pre-folded or the like, as indicated by the dashed lines, in order to facilitate folding the wall-forming part 2.

Wall-forming part 2 may be essentially comprised of a biodegradable and/or recycled fibrous material such as wastepaper and a polymer material which preferably is a biodegradable polymer material. It may, e.g., be a multilayer-type sheet comprising a layer essentially comprised of the fibrous material and another layer which is essentially comprised of the polymer material. This way, the wall-forming part 2 and thus the portion packaging may be very ecological. And, on the other hand, it may be suitable for the purpose, in particular in terms of providing a suitable oxygen barrier and a suitable vapor barrier, thus enabling a long shelf life of the portion package 1.

Suitable polymer materials have been described herein above.

Wall-forming part 2 comprises five sheet sections 2' some of which are indicated in Fig. 3a while all of them are visible in Fig. 3a. Each of the sheet sections 2' can form a respective one of the wall sections 1' of the portion packaging.

During the manufacture, wall-forming part 2 can be folded, e.g., during inserting it into an injection molding tool.

Fig. 3b illustrates, in a perspective view, the wall-forming part 2 of Fig. 3a in a folded state. It comprises four pairs of adjoining edges 20a, 20b, one of which is visible in Fig. 3b. For better visibility, the edges 20a, 20b are drawn in Fig. 3b as being at a small angle with respect to one another.

Next, a support structure 3 is produced using injection molding.

Fig. 3c illustrates, in a perspective view, a main part 1a of a portion packaging comprising the wall-forming part of Figs. 3a, 3b and a support structure 3.

One of the sheet sections 2' of wall-forming part 2 forms an end wall of main part 1a, the other four sheet sections 2' together form a circumferential side wall of the main part 1a.

On the one hand, support structure 3 can close any gap (cf. Fig. 3b) between the edges 20a, 20b of any of the pairs of adjoining edges. This way, an interior space (not visible in Fig. 3c), e.g., for uptake of the extraction material, which is defined by main part 1a, can be delimited in an airtight manner, except for an open side which is not visible in Fig. 3c and which points downwards in Fig. 3c.

The support structure 3 of Fig. 3c comprises or even consists of four bar-shaped constituents three of which are visible in Fig. 3c, indicated by thick lines.

On the one hand, support structure 3 can mechanically stabilize main part 1a. This can be accomplished by the bar-shaped constituents closing the gaps and also by further bar-shaped constituents (not present in Fig. 3c).

Figs. 3d and 3e illustrate, in a perspective view, alternative support structures 7 for the main part 1a of Fig. 3c.

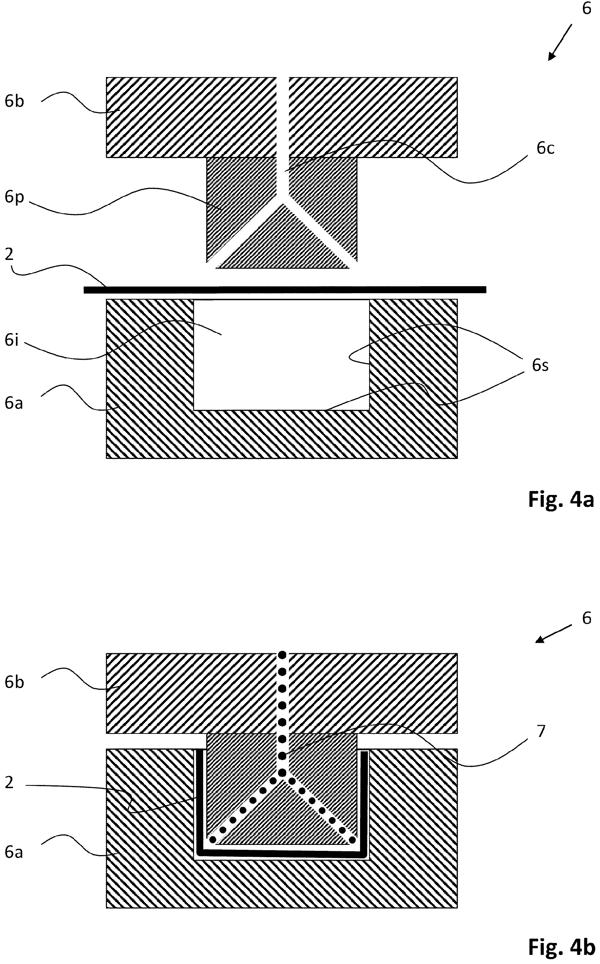

Figs. 4a, 4b further illustrate the manufacturing method, emphasizing the injection molding.

Fig. 4a illustrates, in a cross-sectional view and strongly schematized, an injection molding tool 6 with a wall-forming part 2, such as with the wall-forming part 2 of

Fig. 3a. Injection molding tool 6 comprises a first tool part 6a and a second tool part 6b. Wall-forming part 2 is still flat, e.g., like illustrated in Fig. 3a. First tool part 6a comprises an inner volume 6i delimited by surfaces 6s two of which are indicated in

Fig. 4a. Second tool part 6b comprises one or more channels 6c for guiding injection molding material, and comprises a protruding portion 6p adapted to fit into inner volume 6i.

Fig. 4b illustrates, also in a cross-sectional view and strongly schematized, the injection molding tool 6 of Fig. 4a, with the wall-forming part 2 in a working state. In the working state, wall-forming part 2 is folded substantially in accordance with the main part 1a to be manufactured and thus, folded approximately as illustrated in Fig. 3b. Each of the sheet sections of wall-forming part 2 is in contact with a respective surface 6s of injection molding tool 6.

Furthermore, protruding portion 6p has been introduced into inner volume 6i. And, for example, thereby, wall-forming part 2 may have been folded.

It would also be possible to suitably fold wall-forming part 2 already before inserting it into injection molding tool 6 (not illustrated).

Furthermore, the dotted lines in Fig. 4b symbolize the injection molding material 7 used to produce the support structure 3 (cf. Figs. 3c to 3e). E.g., basically similarly to known "in-mold labelling" processes, a device (here: the main part 1a) is produced from an item (here: the wall-forming part 2) inside the injection molding tool 6 and injection molding material 7 connecting to the item.

When protruding portion 6p i introduced into inner volume 6i with wall-forming part 2 introduced, volumes, in particular channel-like volumes for uptake of injection molding material 7 are formed which substantially define the shape of support structure 3.

Further details need not be described, as injection molding and more particularly also in-mold labelling are a well-known processes. However, in contrast to standard "in-mold labelling" processes, most of the produced device (i.e. here: of the main part 1a) is not made up for by the injection molding material 7 but is made up for by inserted item (here: the wall-forming part 2).

The injection molding material 7 also is a polymer material, e.g., PVOH. This can contribute to environmental friendliness of the produced portion packaging. Suitable polymer materials have been described herein further above.

This way, a main part of a substantially cubic or cuboidal coffee capsule can be produced.

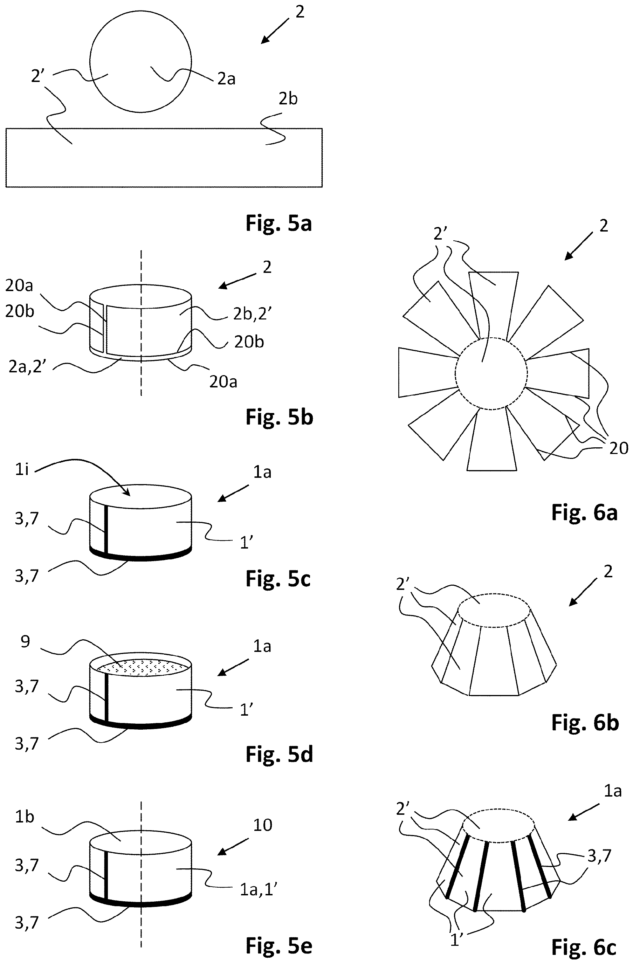

Figs. 5a to 5e and 6a to 6c illustrate further examples of wall-forming parts 2 and corresponding support structures 3 (made of injection molding material 7). As can be seen, this can result in differently shaped main parts 1a.

In case of Figs. 5a to 5e, the wall-forming part 2 comprises a first sub-part 2a and a second sub-part 2b. Each of the sub-parts 2a, 2b is a pre-cut piece of a sheet material, e.g., essentially comprised of a fibrous material and a polymer material, such as herein described before.

Each of the two sub-parts 2a, 2b forms one sheet section 2' forming a respective one of the wall sections 1' of main part 1a.

Fig. 5a illustrates, in a top view, the wall-forming part 2 comprising the two sub-parts 2a, 2b. In order to bring the wall-forming part 2 into a suitable shape for manufacturing the main part 1a, sub-part 2b and its sheet section 2', respectively, is wound, in particular would about an axis as indicated in Figs. 5b and 5e by a dashed line. And furthermore, the two sub-parts 2a, 2b are suitably arranged with respect to one another.

Fig. 5b illustrates, in a perspective view, the wall-forming part 2 of Fig. 5a in the particular state just described. In the working state (not illustrated here), the sub-parts 2a, 2b and their respective sheet section 2', respectively, are arranged approximately this way, but in an injection molding tool.

The wall-forming part 2 comprises two pairs of adjoining edges 20a, 20b. For better visibility, the edges 20a, 20b are drawn in Fig. 5b as being clearly distant from one another.

Next, using injection molding, gaps between the respective edges 20a, 20b of each of the pairs of adjoining edges, are filled by injection molding material 7, so as to produce the support structure 3.

Fig. 5c illustrates, in a perspective view, the main part 1a of a corresponding portion packaging 1 comprising the wall-forming part 2 of Fig. 5a and the corresponding support structure 3.

The interior space 1i defined by main part 1a is visible in Fig. 5c.

Next, an extraction material 9, such as gound coffee, is filled into the interior space 1i.

Fig. 5d illustrates, in a perspective view, the main part 1a of Fig. 5c, with filled-in extraction material 9. Extraction material 9 is enclosed by main part 1a plus the support structure 3 in an airtight manner, except for the open side (which faces up in Fig. 5d).

Next, a lid part, e.g., a foil, is sealed to main part 1a, so as to completely enclose, in an airtight manner, the extraction material 9.

Fig. 5e illustrates, in a perspective view, the so-obtained portion package 1 comprising the main part 2 of Fig. 5c.

This way, a substantially cylindrical coffee capsule can be produced.

In case of Figs. 6a to 6c, the wall-forming part 2 comprises no more than a single pre-cut piece of a sheet material which, e.g., can be essentially comprised of a fibrous material and a polymer material, such as herein described before.

The wall-forming part 2 forms nine sheet sections 2' (some of which are indicated in Fig. 6a, all being visible in Fig. 6a), each section forming a respective one of the wall sections 1' of main part 1a.

Fig. 6a illustrates, in a top view, the wall-forming part 2.

Each of the sheet sections 2' is bound to form a wall section 1' of the main part 1a.

Most of the sheet sections 2' are bound to form a wall section 1' of a circumferential side wall of main part 1a, actually all of them, except for the central one. The central sheet section is bound to form a wall section 1' of an end wall of main part 1b.

Fig. 6b illustrates, in a perspective view, the wall-forming part 2 of Fig. 6a in a folded state. Pairs of adjoining edges are formed, but not specifically emphasized in Fig. 6b. In the working state (not illustrated here), wall-forming part 2 and the respective sheet sections 2', respectively, would be shaped and arranged approximately this way.

Fig. 6c illustrates, in a perspective view, the main part 1a of the corresponding portion packaging comprising the wall-forming part 2 of Fig. 6a and a support structure 3 as obtained in an injection molding step.

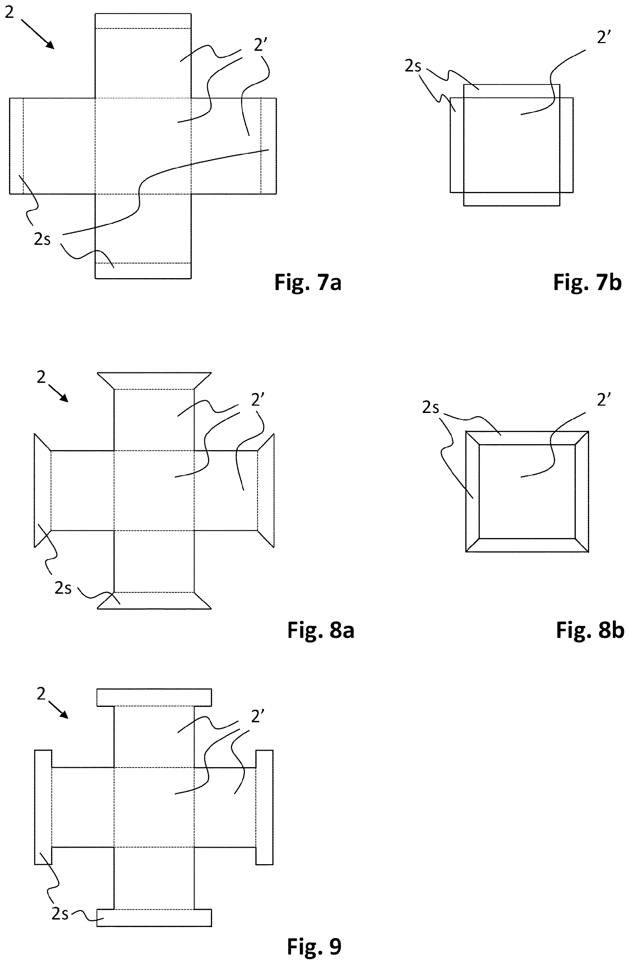

Fig. 7a illustrates, in a top view, a wall-forming part 2 usable for producing a main part of a portion packaging, comprising sealing sections 2s. The wall-forming part 2 can be identical to the one of Fig. 3a, except for being differently shaped (e.g., pre-cut) and scored or pre-folded or the like, so as to form sealing sections 2s for sealing a corresponding main part 1a, so as to completely close, in an airtight manner, the corresponding portion package.

Fig. 7b illustrates, also in a top view, the wall-forming part 2 of Fig. 7a in a folded state. The sealing sections 2s form a collar or fringe. This can facilitate the sealing process.

Analogously to Figs. 7a, 7b, Figs. 8a, 8b illustrate, in a top view, another wall-forming part 2 usable for producing a main part of a portion packaging, comprising sealing sections 2s. While the collar or fringe formed by the sealing sections 2s in Figs. 7a, 7b is interrupted at four corners, the collar or fringe in Figs. 8a, 8b is practically continuous, due to the shape of the wall-forming part 2.

Fig. 9 illustrates, in a top view, yet another wall-forming part 2 usable for producing a main part of a portion packaging, comprising sealing sections 2s. In this case, in a folded state (not illustrated), the collar or fringe in Fig. 9 would be continuous, due to the shape of the wall-forming part 2, and the sealing sections 2s would even be overlapping at the four corners.

As will have become clear from the above, the described proposed manufacturing methods are suitable for producing new kinds of portion packagings and portion packages, respectively, in a very environmentally friendly way.

## Claims

1. A **portion packaging** for packaging an **extraction material** for preparation of a beverage from the extraction material and an extraction liquid, the portion packaging comprising a **first part** comprising two or more **wall sections** of the portion packaging and comprising
- a **wall-forming part** comprising two or more **sheet sections,** each of the wall sections comprising a respective one of the sheet sections; and
- an injection-molded **support structure;**
the wall-forming part comprising one or more **pairs of adjoining edges,** each of the sheet sections having at least one **edge** forming, together with an **adjoining edge** of a neighboring one of the sheet sections, one of the pairs of adjoining edges, the support structure **interconnecting** the adjoining edges of each of the pairs of adjoining edges.

2. The portion packaging according to claim 1, wherein the support structure comprises a **first polymer material,** in particular wherein the support structure is essentially made of the first polymer material, more particularly wherein the support structure is comprised of the first polymer material by at least 90 % by weight, more particularly by at least 95 % by weight.

3. The portion packaging according to claim 1 or claim 2, wherein the first polymer material is a biodegradable polymer material, in particular wherein the first polymer material comprises one or more of
- a poly(vinyl alcohol), in particular a vinyl-alcohol copolymer;
- a cellulose-ether polymer;
- a butenediol-vinylalcohol copolymer;
- an ethylene-vinylalcohol copolymer;
- a poly(lactic acid);
- a polyhydroxyalkanoate, in particular a hydroxyalkanoate copolymer, more particularly a hydroxybutyrate or a hydroxybutyrate copolymer, even more particularly a hydroxybutyrate hydroxyhexanoate copolymer;
- a polybutylene succinate.

4. The portion packaging according to one of claims 1 to 3, the support structure closing any **gap** between the adjoining edges of each of the pairs of adjoining edges, in particular in an airtight manner.

5. The portion packaging according to one of claims 1 to 4, the first part defining an **interior space,** the interior space being **open** at one side referred to as **open side** and being otherwise delimited, in an airtight manner, by the wall-forming part and the support structure.

6. The portion packaging according to one of claims 1 to 5, the wall-forming part and, in particular each of the sheet sections, comprising a **fibrous material** and a **second polymer material,** in particular
- the wall-forming part being comprised of the fibrous material by at least 60 % by weight, more particularly by at least 80 % by weight; and/or
- the wall-forming part being comprised of the second polymer material by at most 30 % by weight, more particularly by at most 20 % by weight.

7. The portion packaging according to claim 6, wherein at least one of
- the fibrous material comprising, at at least 75 %, in particular at at least 90 %, cellulose fibers;
- the fibrous material comprising, at at least 75 %, in particular at at least 90 %, recycled material, more particularly wastepaper or material obtained from wastepaper, in particular wastepaper fibers;
- the fibrous material comprising, at at least 75 %, in particular at at least 90 %, renewable material, in particular plant fibers;
- the fibrous material comprising, at at least 75 %, in particular at at least 90 %, biodegradable material, in particular compostable material.

8. A **portion package** comprising a portion packaging according to one of claims 1 to 7 in which an extraction material, in particular **ground coffee,** is contained, in particular the portion packaging enclosing the extraction material in an airtight manner.

9. A **method** for manufacturing a **portion packaging** for packaging an **extraction material** for preparation of a beverage from the extraction material and an extraction liquid, in particular for manufacturing a portion packaging according to one of claims 1 to 7, the portion packaging comprising a **first part** comprising two or more **wall sections** of the portion packaging, the method comprising
- providing a **wall-forming part** comprising two or more **sheet sections;**
- bringing the wall-forming part into a **working state** comprising introducing the wall-forming part into an **injection molding tool;**
- carrying out an **injection molding step** with an **injection molding material** and by means of the injection molding tool with the wall-forming part in the working state, to produce a **support structure** from the injection molding material; the wall-forming part in the working state comprising one or more **pairs of adjoining edges,** each of the sheet sections having at least one **edge** forming, together with an **adjoining edge** of a neighboring one of the sheet sections, one of the pairs of adjoining edges, the support structure **interconnecting** the adjoining edges of each of the pairs of adjoining edges, and each of the sheet sections forming a respective one of the wall sections.

10. The method according to claim 9, bringing the wall-forming part into the working state comprising for at least one, in particular for each one, of the pairs of adjoining edges:
- bringing closer to one another the edges which, in the working state, form a respective one of the pairs of adjoining edges.

11. The method according to claim 9 or claim 10, bringing the wall-forming part into the working state comprising one or both of
- **folding** the wall-forming part,
- **winding** the wall-forming part, in particular winding the wall-forming part about an **axis** defined by the first part.

12. The method according to one of claims 9 to 11, carrying out the injection molding step comprising closing any gap between the adjoining edges of each of the pairs of adjoining edges by the injection molding material, in particular in an airtight manner.

13. The method according to one of claims 9 to 12, wherein the injection molding material comprises a **first polymer material,** in particular wherein the injection molding material is essentially the first polymer material, more particularly wherein the injection molding material is comprised of the first polymer material by at least 90 % by weight, more particularly by at least 95 % by weight.

14. A **method** for manufacturing a **portion package,** in particular a portion package according to claim 8 and/or a portion package comprising a portion packaging according to one of claims 1 to 7, the method comprising
- manufacturing a portion packaging according to one of claims 1 to 7, the portion packaging comprising, in addition to the first part, a **second part;**
- introducing an **extraction material** into the first part and/or into the second part;
- **sealing** the portion packaging, comprising bonding the first part and the second part to one another.
